# EUROPEAN PATENT APPLICATION

(11) **EP 1 935 249 A1**
(43) Date of publication of application: **25.06.2008**
(21) Application number: 06126916.3
(22) Date of filing: 21.12.2006
(51) Int. Cl.: A23C 9/00

(54) **Spreadable dairy product**

(71) Applicant: Nestec S.A., 1800 Vevey (CH)
(72) Inventor: Beutler, Ernst, 3550 Langnau (CH); Costa, Carla, 1071 Chexbres (CH); Fischer, Caroline, 3510 Konolfingen (CH); Langourieux, Sylvie, 3074 Muri bei Bern (CH)
(74) Representative: Chautard, Cécile

(57) **Abstract**

The invention concerns a shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners, is not caramelised and is thickened by shear so that it has a firmness corresponding to a maximum compression force of at least 20g measured at 25°C by a Texture Analyser equipped with a 5kg load cell and a 20 mm diameter cylinder probe with a penetration into the sample at a constant speed 1 mm/s during 10s.

## Description

### FIELD OF THE INVENTION

This invention relates to a food product having a spreadable texture suitable for example for spreading on bread, and to a method of making such a food product. In particular, the invention concerns a dairy based food product including at least an organoleptic modifying food substance such as syrup, fruit, sweet or savoury food pastes or honey that can be easily spreadable.

### BACKGROUND TO THE INVENTION

Sweet spreads that can be applied to bread include jams, jellies, fruit preserves, peanut butter, hazelnut spreads made from hazel nuts, cocoa butter and vegetable oil and dulce de leche (also known as doce de leite) caramelised milk spreads.

EP-A-938848 describes a milk based spreadable product comprising milk, sugar, fat and emulsifier. It is prepared by thermally treating sugar, fat and emulsifier and then mixing with a sugared condensed milk to provide a homogenised paste.

DE-A-19627054 describes a milk based sweet cream product prepared from sweetened condensed milk with flavourings and a thickener comprising an alkaline earth metal salt such as calcium chloride.

### SUMMARY OF THE INVENTION

The present invention seeks to provide a dairy based spreadable product containing at least an organoleptic modifying food substance without the need for using any emulsifying or thickening additive.

A shelf stable spread according to the present invention comprises sweetened condensed milk of fat content 2 to 25 % by weight and water content 15 to 35% by weight, and at least one organoleptic modifying food substance added at a ratio ranging from 2% to 30% by weight and preferably 5% to 15% by weight, said spread being substantially free of emulsifiers and thickeners, not caramelized and thickened by shear so that it has a firmness corresponding to a maximum compression force of at least 20g measured at 25°C by a Texture Analyser, for example of the TA.HDi type, equipped with a 5kg load cell and a 20 mm diameter cylinder probe with a penetration into the sample at a constant speed 1mm/s during 10s.

According to another aspect of the invention a shelf stable spread comprises sweetened condensed milk of fat content 2 to 25 % by weight and water content 15 to 35% by weight, and at least one organoleptic modifying food substance added at a ratio ranging from 2% to 30% by weight and preferably 5% to 15% by weight, said spread being substantially free of emulsifiers and thickeners, not caramelized and thickened by shear so that it has a yield point of at least 90Pa measured by a rheometer, for example of the Haake RS100 type and its vane geometry FL22, using a stress sweep from 0 to 560Pa at 25°C. Preferably the spread has a yield point of at least 90Pa and also a firmness corresponding to a maximum compression force of at least 20g measured by the Texture Analyser.

According to another aspect of the invention a shelf stable spread comprises sweetened condensed milk of fat content 2 to 25 % by weight and water content 15 to 35% by weight and at least one organoleptic modifying food substance added at a ratio ranging from 2% to 30% by weight and preferably 5% to 15% by weight, said spread being substantially free of emulsifiers and thickeners, not caramelized and thickened by shear so that it has a storage modulus G' for a stress value equal to 1Pa of at least 400 Pa measured by a rheometer, for example of the Haake RS100 type and its vane geometry FL22 using a stress sweep from 0 to 20Pa at a frequency of 1Hz and at 25°C. Preferably the spread has a storage modulus G' of at least 400 Pa and also a yield point of at least 90Pa and/or a firmness corresponding to a maximum compression force of at least 20g measured by the Texture Analyser.

According to another aspect of the invention a shelf stable spread comprises sweetened condensed milk of fat content 2 to 25% by weight and water content 15 to 35% by weight and at least one organoleptic modifying food substance added at a ratio ranging from 2% to 30% by weight and preferably 5% to 15% by weight, said spread being thickened by shear, the spread being substantially free of emulsifiers and thickeners and containing lactose crystals visible as distinct and regular crystals of maximum dimension less than 25 microns under optical microscopy in Differential Interference Contrast mode with a magnification factor of 640x.

According to another aspect of the invention a shelf stable spread comprises sweetened condensed milk of fat content 2 to 25% by weight and water content 15 to 35% by weight, and at least one organoleptic modifying food substance added at a ratio ranging from 2% to 30% by weight and preferably 5% to 15% by weight, said spread being thickened by shear, the spread being substantially free of emulsifiers and thickeners and sufficiently homogeneous that discrete fat globules are substantially not distinctly visible under fluorescence microscopy with a magnification factor of 640x when the product is stained with Nile Red dye. Nile Red stains the fat present. The absence or quasi-absence of distinctly visible fat globules in the spread indicates that the shear applied has caused a strong aggregation between the fat and the proteins of the condensed milk.

In a process according to the invention for the preparation of a shelf stable spread from sweetened condensed milk of fat content 2 to 25 % by weight and water content 15 to 35% by weight and at least one organoleptic modifying food substance added at a ratio ranging from 2% to 30% by weight and preferably 5% to 15% by weight, the sweetened condensed milk organoleptic modifying food substance mixture is subjected to high shear, in the absence of added emulsifier or thickener, to thicken the sweetened condensed milk to a spread having a firmness corresponding to a maximum compression force of at least 20g measured at 25°C by a Texture Analyser for example of the TA.HDi type equipped with a 5kg load cell and a 20 mm diameter cylinder probe with a penetration into the sample at a constant speed 1mm/s during 10s) and/or a yield point of at least 90Pa measured by a rheometer for example of the Haake RS100 type and its vane geometry FL22 using a stress sweep from 0 to 560Pa at 25°C.

In an alternative embodiment of the process for the preparation of a shelf stable spread from sweetened condensed milk of fat content 2 to 25 % by weight and water content 15 to 35% by weight and at least one organoleptic modifying food substance added at a ratio ranging from 2% to 30% by weight and preferably 5% to 15% by weight, the sweetened condensed milk is subjected to high shear, in the absence of added emulsifier or thickener, to thicken the sweetened condensed milk to a spread of firmness corresponding to a maximum compression force of at least 20g measured at 25°C by a Texture Analyser equipped with a 5kg load cell and a 20 mm diameter cylinder probe with a penetration into the sample at a constant speed 1mm/s during 10s and the sheared sweetened condensed milk is mixed with said organoleptic modifying food substance.

### DETAILED DESCRIPTION OF THE INVENTION

The dairy based spreadable product containing at least one organoleptic modifying food substance is made from the mixture of a sweetened condensed milk generally having a water content of 15 to 35% by weight, preferably 25 to 28% and at least one organoleptic modifying food substance added at a ratio ranging from 2% to 30% by weight and preferably 5% to 15% by weight. By weight means percentage based on the total weight of the shelf stable spread.

The total sugar content of the sweetened condensed milk is preferably from about 35% by weight sugar in water up to the solubility of sugar in water which is about 65% by weight. The fat content of the sweetened condensed milk is generally 2 to 20 or 25% fat by weight, preferably 5 to 10%. The sweetened condensed milk preferably has a water activity (defined as the ratio of the water vapor pressure over a food to that over pure water) of lower than 0.86, most preferably between 0.80 and 0.85.

The sweetened condensed milk (SCM) can be fresh or recombined SCM, that is fresh milk that has been condensed and sweetened or sweetened condensed milk derived from skimmed milk and milk fat that have been recombined and sweetened. For either fresh or recombined SCM, the solid (i.e. non-aqueous) content of the sweetened condensed milk consists of non-fat milk solids, milk fat and added sugar.

The sweetened condensed milk can be filled SCM wherein the milk fat has been replaced by vegetable fat. The sweetened condensed milk can also be an imitation SCM wherein an additional carbohydrate filler such as maltodextrin or soluble fibers like resistant dextrin has been added. Other fillers soluble or not can be considered such as inulin, oligosaccharides and beta glucan. In imitation SCM the fat can consist of milk fat, or all or part of the milk fat can be replaced by vegetable oil. A typical filled SCM formulation comprises 20% skimmed milk, 45% added sugar, 8% vegetable oil and 27% water.

By organoleptic modifying food substance it is understood in the present invention any substances comprising primarily carbohydrates and/or fats and/or proteins and/or water that can be eaten or drunk for nutrition.

Within the scope of the invention, the organoleptic modifying food substance is typically chosen from a list comprising syrup, fruit, sweet or savory food pastes, honey. Examples of syrups are cocoa syrup, malt syrup or fruit syrup. Examples of the fruits added can be in a form of a puree or concentrate (liquid or powder). The fruit part can contain fruit bits. Examples of fruits that can be added are apple, strawberry, apricot, mango, banana etc.. Examples of sweet or savory pastes are nut pastes, bean pastes, chilly pastes etc.

Flavoring agent and/or coloring agent, which is not an organoleptic modifying food substance as defined above, can also be added to the mixture.

The high shear is preferably applied by passing the sweetened condensed milk through a homogeniser, in which the sweetened condensed milk is passed through a narrow gap under pressure. The gap is for example about 0.1 mm wide. Homogenisers are described at pages 115 to 118 of the 'Dairy Processing Handbook', 1st edition, published by Tetra Pak in 1995.

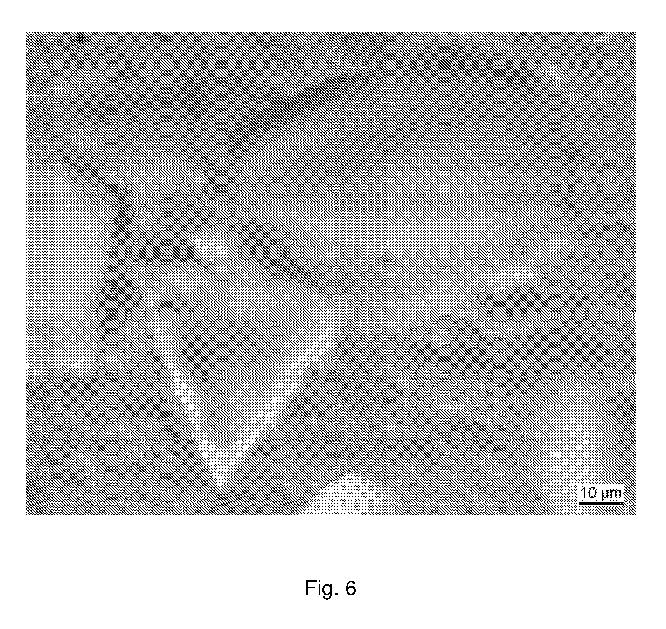

Examples of suitable homogenisers are shown in Fig. 6.3.4 on page 117 and Fig. 6.3.6 on page 118.

The homogenisation pressure is the pressure applied to the sweetened condensed milk before passing through the narrow gap. This homogenisation pressure is preferably at least 100 bar, more preferably in the range of 150 to 500bar. The high shear caused by passage through a narrow gap under such pressure causes a strong aggregation between fat and proteins to the extent that discrete fat globules are substantially not distinctly visible under fluorescence microscopy after staining with Nile red dye. By substantially not distinctly visible, it is meant that aggregation between fat and proteins is such that there are nearly no more visible discrete fat globules, only a few isolated fat globules remaining present after the homogenisation treatment. The high shear also causes the sweetened condensed milk to thicken to a consistency suitable for use as a spread. The texture or firmness of the spread produced can be varied as required by varying the degree of shear applied, for example the pressure used in a homogeniser. A greater shear (higher pressure in a homogeniser) tends to form a firmer spread. The high shear mixing can be carried out at any temperature below that causing caramelisation but is usually carried out at ambient temperature.

The sweetened condensed milk and the organoleptic modifying food substance are preferably mixed in an in-line mixer, for example a static in-line mixer or an in-line dynamic mixer such as a centrifugal pump or rotor and stator device, before or after being sheared in a homogeniser.

After the spread has been sheared to the required consistency, it can be filled into a container such as a glass jar or a plastic tub using single-stream or multi-stream filling apparatus, and the container is then closed and packaged for transport.

The consistency of the spread can be measured in various ways. The firmness can be measured at 25°C by a Texture Analyser for example of the TA.HDi type (available commercially from Stable Micro Systems of Surrey, U.K.) equipped with a 5kg load cell and a 20 mm diameter cylinder probe with a penetration into the sample at a constant speed 1mm/s during 10s. The measurements are run by means of 'Texture Expert Exceed' software supplied with the instrument and installed on a computer linked to the instrument.. The maximum compression force is reported. The maximum compression force measured for the spread of the invention is generally at least 20 g, for example 50 to 500g. By comparison, the maximum compression force measured for the SCM starting material is generally in the range 4 to 10 g.

Additionally, the yield point and the storage modulus G' of the spread can be measured by a rheometer. The yield point and the storage modulus G' of the spread are much higher than the yield point and G' of the sweetened condensed milk starting material. For a detailed definition of yield point and storage modulus G' reference can be made to "Handbook of elementary rheology" by Howard A. Barnes ISBN 0-9538032-0-1.

The spread produced has a texture similar to that of a nut-based spread, but has a lower calorie content and a lower fat content.

The spread can also be characterised by microscopy. If the spread is examined under optical microscopy in Differential Interference Contrast mode with a magnification factor of 640x, it will be seen that the spread contains lactose crystals visible as distinct crystals. Distinct lactose crystals can also be seen in SCM, but are not seen in some dulce de leche spreads because of hydrolysis of the sugars in such spreads. In dulce de leche that were not hydrolysed, large crystals, of lactose i.e. more that 25 micrometers can be seen. The microscopy can be carried out with or without polarisation, the crystals being clearly visible in the spread of this invention.

If microscopy is carried out on samples stained with Nile Red dye, which stains the fat present, hardly any distinct fat globules can be seen in the spread of the invention. Using this staining technique, discrete fat globules can be seen in great number both in sweetened condensed milk and in dulce de leche.

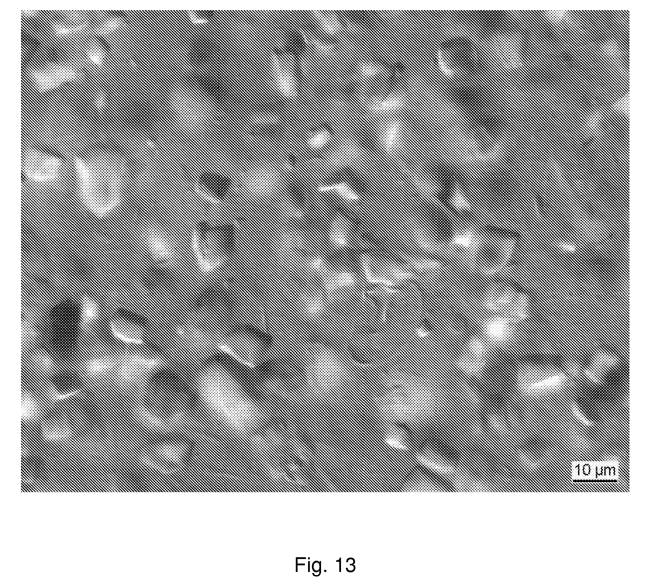

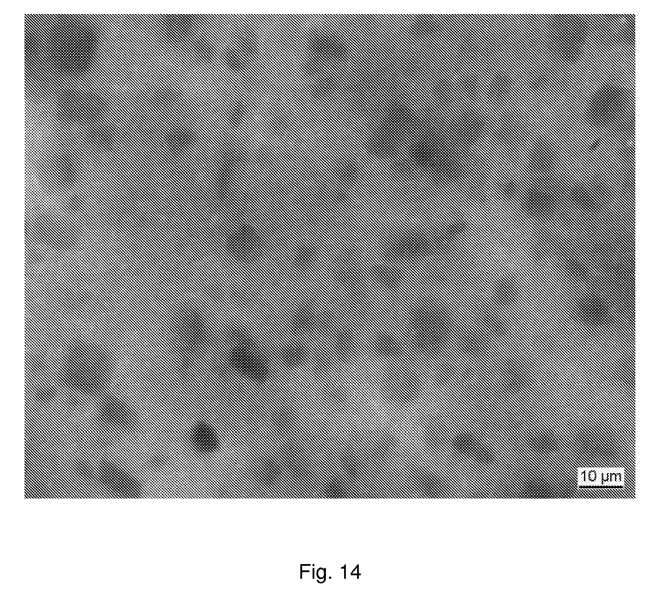

The invention is illustrated by the following Examples, in which parts and percentages are by weight. The Examples will be described with reference to Figures 1 to 14 of the accompanying drawings, of which:
- Figure 1 is a photomicrograph of the spread of Example 1 under optical microscopy in Differential Interference Contrast mode with a magnification factor of 640x;
- Figures 2 to 6 are photomicrographs of comparison products under the same conditions as Figure 1;
- Figure 7 is a photomicrograph under fluorescence microscopy of the spread of Example 1 stained with Nile Red dye;
- Figures 8 to 12 are photomicrographs of comparison products under the same conditions as Figure 7;
- Figure 13 is a photomicrograph of the spread of Example 2 under optical microscopy in Differential Interference Contrast mode with a magnification factor of 640x;
- Figure 14 is a photomicrograph under fluorescence microscopy of the spread of Example 2 stained with Nile Red dye, and
- Figure 15 shows a four blade vane geometry used for measuring the yield point and storage modulus G' of the spread of the invention.

### Example 1

Filled sweetened condensed milk (FSCM) of water content 27% and fat content 8% was put into a storage tank at 20-25°C. The sweetened condensed milk was pumped through an in-line homogeniser of the type shown in Figure 6.3.4 of 'Dairy Processing Handbook' with a pressure setting at 400 bar. The product emerging from the homogeniser was mixed with strawberry fruit puree containing strawberry bits at a ratio of 7% by weight using a conventional static mixer at room temperature until an homogenized mix was obtained. The average size of the fruits was approximately 5mm. The mix obtained was then filled into containers which were immediately sealed. The thickened texture similar to that of a nut-based spread is achieved a few hours after filling.

The firmness of the spread was analysed using a Texture Analyser TA.HDi equipped with a 5kg load cell. Samples were conditioned in a chamber at 25°C before analysis. An aluminum cylinder probe (P/20) of diameter 20mm penetrates into the sample at pre-test speed 1 mm/s and test speed 1 mm/s to a penetration distance of 10mm, with post-test speed 10 mm/s. The compression force in grams is measured as a function of the penetration distance with a trigger value fixed at 1g. The force at 10mm (maximum force) was recorded as 133g.

The firmness of fresh and aged SCM, and of three Doce de Leite products, was similarly measured using the Texture Analyser TA.HDi and the results are shown in Table 1.

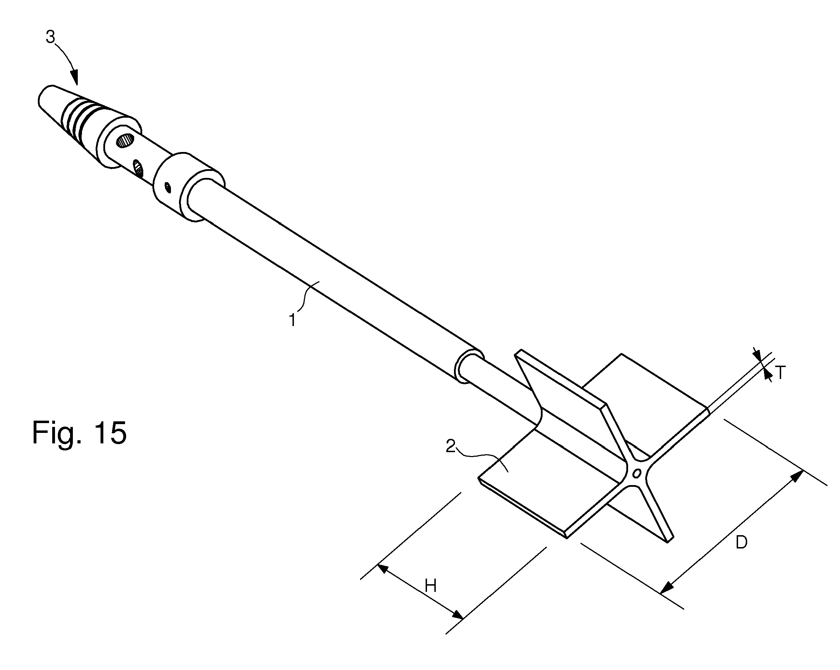

The yield point of the spread was measured using Rheometer Haake RS100 with a vane geometry FL22. A vane of the FL 22 type is shown in Figure 15. The vane consists of a cylindrical rod 1 at one end of which 4 blades 2 extending radially with respect to rod 1 extend. A fitting means 3 are provided at the end of the rod opposite the blades. The respective dimensions of the vane shown in the Figure are as follow:
Blade height H: 16 mm; Blade diameter D: 22mm and blade thickness T: 1mm. Samples were conditioned in a cup in a chamber at 25°C before measurement. The FL 22 geometry penetrates into the sample. Then a stress sweep of 0 to 560 Pa is applied to the sample at 25°C. The yield point measured was 520Pa.

The storage modulus G' of the spread was measured using Rheometer Haake RS100 with a vane geometry FL22. Samples were conditioned in a cup in a chamber at 25°C before measurement. The FL 22 geometry penetrates into the sample. Then a stress sweep of 0 to 20 Pa is applied to the sample at a frequency of 1 Hz at 25°C. The G' measured at a stress value equal to 1 Pa was 4858Pa.

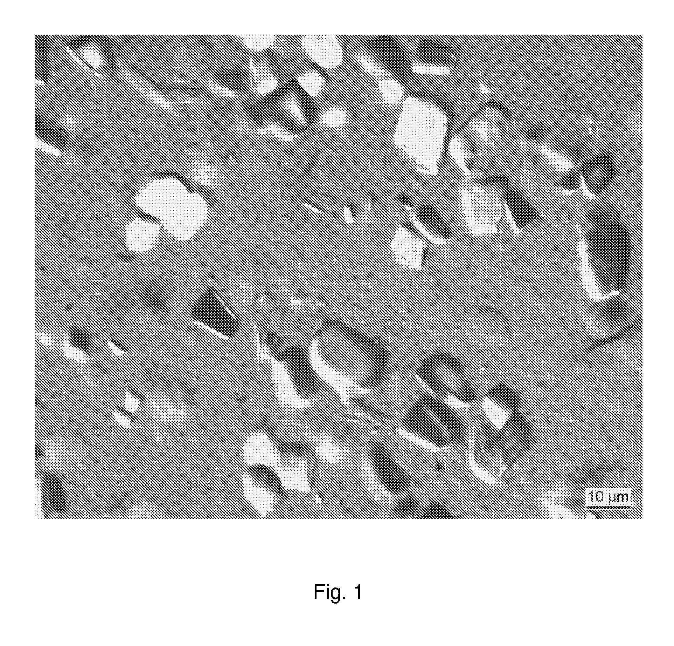

Samples of the spread were observed with a Leica DMR microscope in Differential Interference Contrast mode with a magnification factor of 640x. Observations were also made in a polarization mode. In each case distinct sugar (lactose) crystals of length about 10 µm were visible. The contrast between the sugar crystals and the mass of the spread appears clearly, and Figure 1 is a photomicrograph of this.

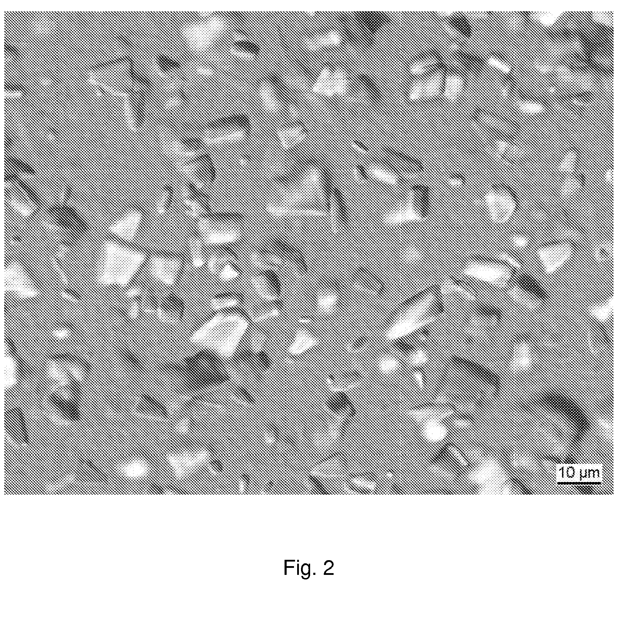

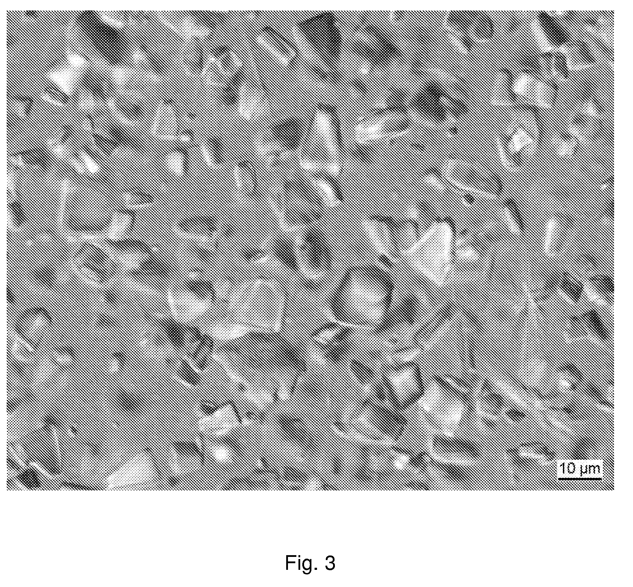

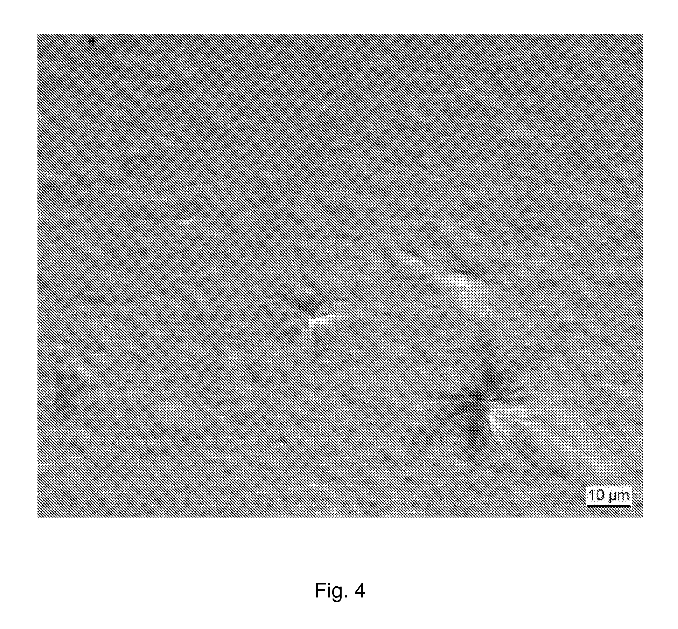

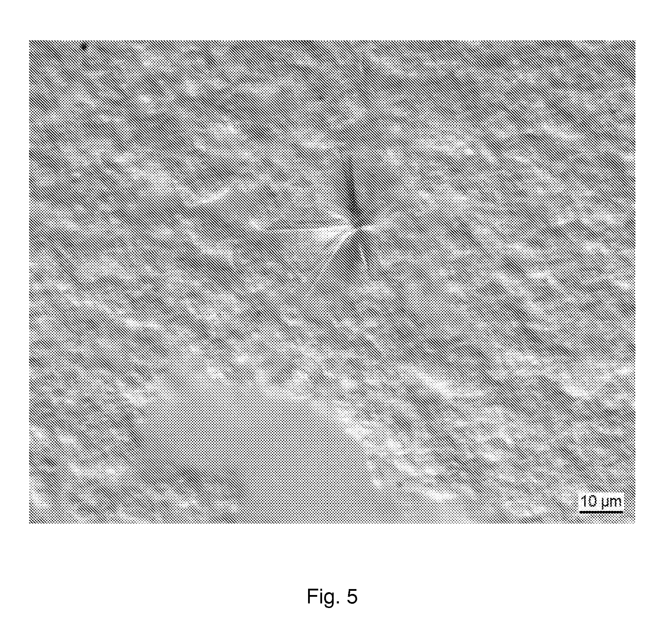

Samples of the aged and fresh SCM, and of the three Doce de Leite products were also observed under the same microscopy conditions as for Figure 1, and Figures 2 to 6 are photomicrographs at the same magnification respectively of the aged and fresh SCM and the three Doce de Leite products (see Table 1 for details). Distinct sugar crystals of about 10µm can be seen in the SCM in Figures 2 and 3. No sugar crystals can be seen in the Doce de Leite samples of Figures 4 and 5. Figure 6 shows that this Doce de Leite sample contains a few much bigger sugar crystals, formed by uncontrolled crystallisation after heat treatment and cooling.

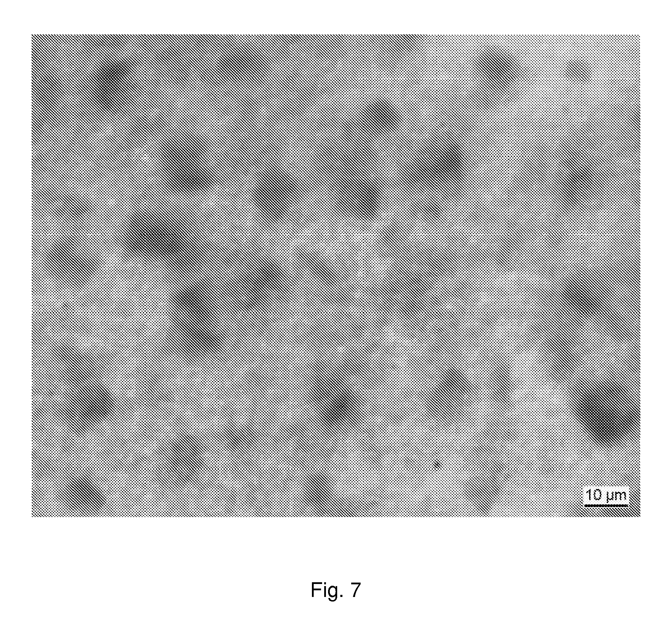

Samples of the spread were stained with Nile Red by a film technique. 5 mg Nile Red dye (Sigma N-3013) was added to 100 ml of a 5% solution of polyvinyl pyrrolidone in ethanol. 20 µl of the dyed solution was spread onto a 12mm diameter cover slide and allowed to dry, and the cover slide was then put onto the sample. The prepared sample was observed with a Leica DMR microscope with a magnification factor of 640x under light of a wavelength causing the Nile Red to fluoresce. A diffuse pattern was seen as shown in the photomicrograph marked Figure 7, with hardly any discrete fat globules being visible. Microscopy Pictures taken in region of spread lacking of fruit bits.

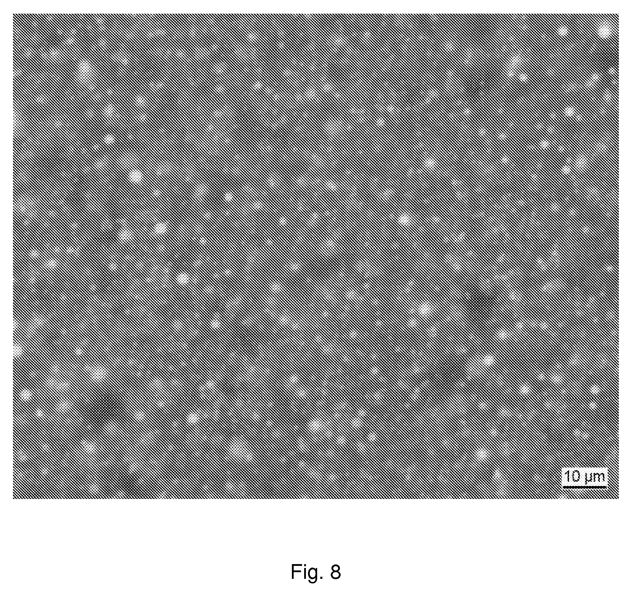

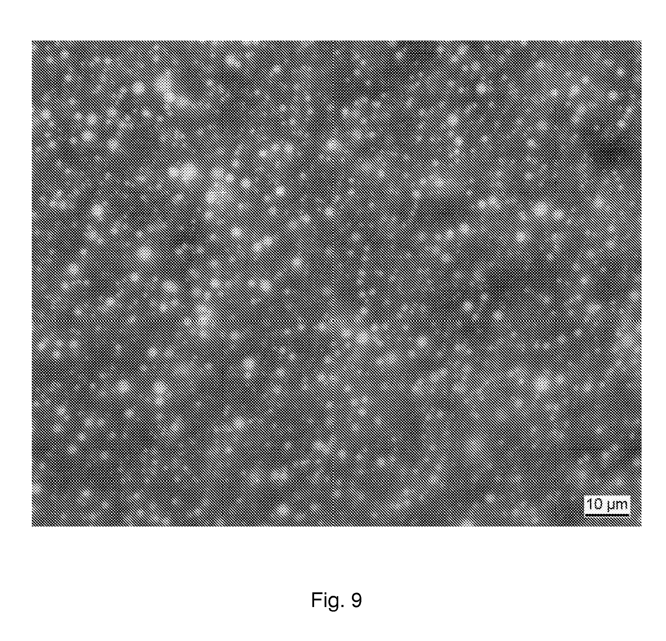

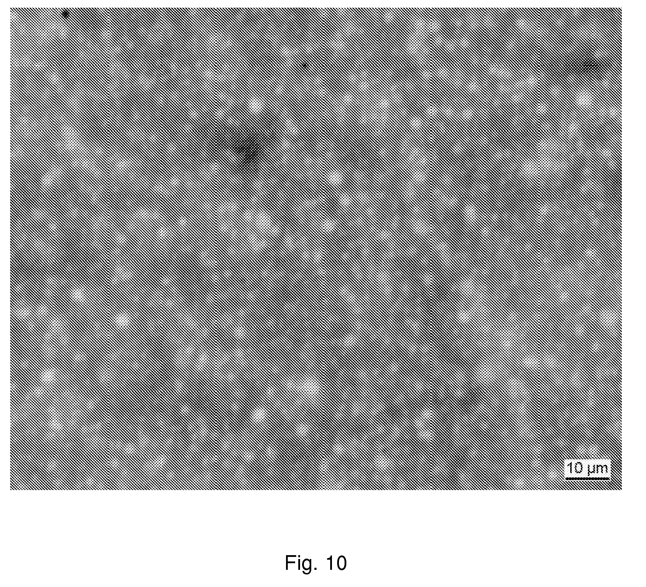

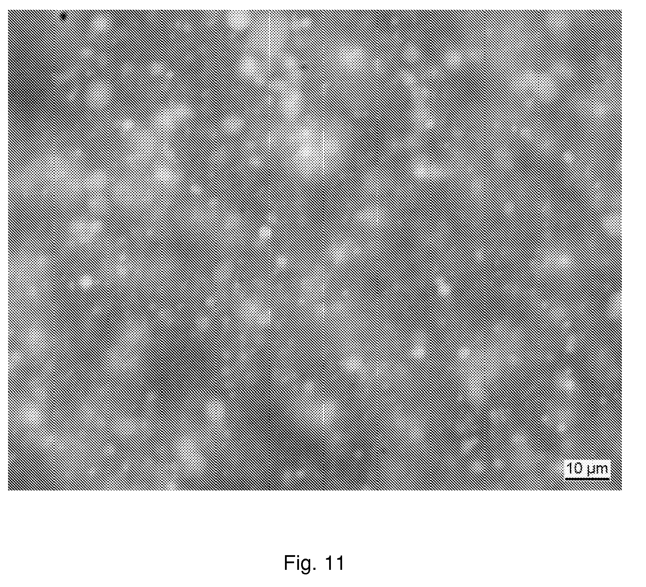

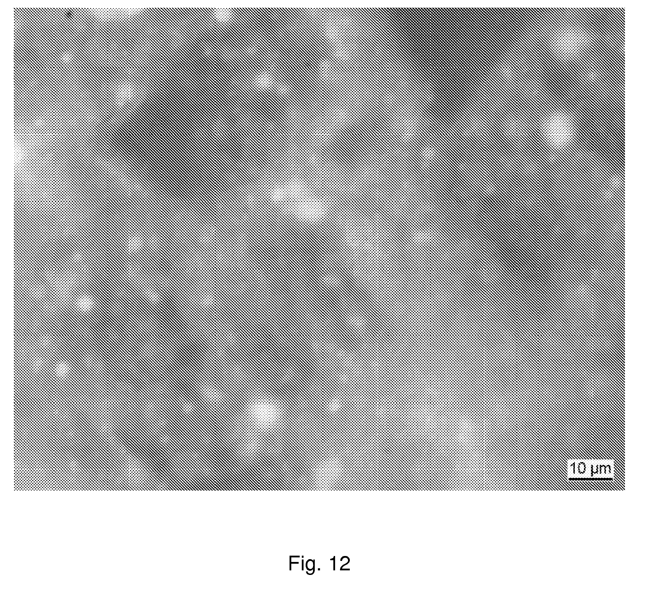

Samples of the fresh and aged SCM, and of the three Doce de Leite products were also stained and observed under the same microscopy conditions and Figures 8 to 12 are photomicrographs respectively of the aged and fresh SCM and the three Doce de Leite products (see Table 1 for details). Discrete fat globules in great number are very clearly visible in the SCM in Figures 8 and 9, and also in the Doce de Leite of Figure 10. Discrete fat globules in great number are also visible in the Doce de Leite samples of Figures 11 and 12, although these are not quite so distinct as the fat globules in Figure 10.

**Table 1**

| Sample | Texture Analyser TA.HDi Maximum force (g) | yield point (Pa) | G' (Pa) | Microscopy |
|---|---|---|---|---|
| Spread of Example 1 | 133 | 520 | 4858 | Figures 1 and 7 |
| Spread of example 2 | 128 | 415 | 3355 | Figures 13 and 14 |
| Aged SCM | 7 | 21 | 14 | Figures 2 and 8 |
| Fresh SCM | 6 | 15 | 5 | Figures 3 and 9 |
| Nestle Moca Doce de Leite Para Corte | 360 | >560 | 9229 | Figures 4 and 10 |
| Nestle Moca Doce de Leite Cremos | 24 | 85 | 1219 | Figures 5 and 11 |
| Itambe Doce de Leite Pastoco | 132 | 460 | 7810 | Figures 6 and 12 |

### Example 2

Sweetened condensed milk (SCM) of water content 26.8% and fat content 8% was put into a storage tank at 20-25°C. A cocoa-malt syrup having the composition shown in table 2 was prepared. The sweetened condensed milk and the syrup was added in a proportion 5% of syrup in a mixing tank. The mixture obtained was fed in an in-line homogeniser of the type shown in Figure 6.3.4 of 'Dairy Processing Handbook' with a pressure setting at 400 bar. The product emerging from the homogeniser was filled into containers which were immediately sealed. The thickened texture similar to that of a nut-based spread is achieved a few hours after filling.

The firmness of the spread was analysed using a Texture Analyser TA.HDi equipped with a 5kg load cell. Samples were conditioned in a chamber at 25°C before analysis. An aluminium cylinder probe (P/20) of diameter 20mm penetrates into the sample at pre-test speed 1 mm/s and test speed 1 mm/s to a penetration distance of 10mm, with post-test speed 10 mm/s. The compression force in grams is measured as a function of the penetration distance with a trigger value fixed at 1g. The force at 10mm (maximum force) was recorded as 128g.

The yield point of the spread was measured using Rheometer Haake RS100 with a vane geometry FL22. Samples were conditioned in a cup in a chamber at 25°C before measurement. The FL 22 geometry penetrates into the sample. Then a stress sweep of 0 to 560 Pa is applied to the sample at 25°C. The yield point measured was 415Pa.

The storage modulus G' of the spread was measured using Rheometer Haake RS100 with a vane geometry FL22. Samples were conditioned in a cup in a chamber at 25°C before measurement. The FL 22 geometry penetrates into the sample. Then a stress sweep of 0 to 20 Pa is applied to the sample at a frequency of 1 Hz at 25°C. The G' measured at a stress value equal to 1 Pa was 3355Pa.

It will be understood that various modifications and/or improvements obvious to those skilled in the art may be made to the examples described in the present description without departing from the scope of the invention defined by the annexed claims. In particular, liquid colouring/flavoring agent and/or the organoleptic modifying food substance such as fruit paste, honey, chocolate etc can in addition be added directly before filling to the spread mixture of the invention stream in order to create visual effect in the end product, for example so as to produce a spread having alternating outside stripes, thereby improving the spread's appearance and/or flavour characteristics. This can be done for example by co-filling through a specific filling nozzle.

**Table 2**

| Cocoa-Malt Syrup | in % w/w |
|---|---|
| Cocoa powder | 20.0 |
| Malt extract | 20.0 |
| Sugar | 30.0 |
| Chocolate & Malt flavours | 4.8 |
| Water | 25.2 |

## Claims

1. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners, is not caramelised and is thickened by shear so that it has a firmness corresponding to a maximum compression force of at least 20g measured at 25°C by a Texture Analyser equipped with a 5kg load cell and a 20 mm diameter cylinder probe with a penetration into the sample at a constant speed 1 mm/s during 10s.

2. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners, is not caramelised and is thickened by shear so that it has a yield point of at least 90Pa measured by a rheometer with a four blade vane geometry (FL22) using a stress sweep from 0 to 560Pa at 25°C.

3. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners, is not caramelised and is thickened by shear so that it has a G' value (storage modulus) for a stress value equal to 1Pa of at least 400 Pa measured by a rheometer with a four blade vane geometry (FL22) using a stress sweep from 0 to 20Pa at a frequency of 1Hz and at 25°C.

4. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners, is not caramelised and is thickened by shear so that it has a firmness corresponding to a maximum compression force of at least 20g measured at 25°C by a Texture Analyser equipped with a 5kg load cell and a 20 mm diameter cylinder probe with a penetration into the sample at a constant speed 1mm/s during 10s and has a yield point of at least 90Pa measured by a rheometer with a four blade vane geometry (FL22) using a stress sweep from 0 to 560Pa at 25°C.

5. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners, is not caramelised and is thickened by shear so that it has a firmness corresponding to a maximum compression force of at least 20g measured at 25°C by a Texture Analyser equipped with a 5kg load cell and a 20 mm diameter cylinder probe with a penetration into the sample at a constant speed 1mm/s during 10s and has a G' value (storage modulus) for a stress value equal to 1Pa of at least 400 Pa measured by a rheometer with a four blade vane geometry (FL22) using a stress sweep from 0 to 20Pa at a frequency of 1Hz and at 25°C.

6. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners, is not caramelised and is thickened by shear so that it has a yield point of at least 90Pa measured by a rheometer with a four blade vane geometry (FL22) using a stress sweep from 0 to 560Pa at 25°C and has a G' value (storage modulus) for a stress value equal to 1Pa of at least 400 Pa measured by a rheometer with a four blade vane geometry (FL22) using a stress sweep from 0 to 20Pa at a frequency of 1Hz and at 25°C.

7. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners, is not caramelised and is thickened by shear so that it has a firmness corresponding to a maximum compression force of at least 20g measured at 25°C by a Texture Analyser equipped with a 5kg load cell and a 20 mm diameter cylinder probe with penetration into the sample at a constant speed 1mm/s during 10s, a yield point of at least 90Pa measured by a rheometer with a four blade vane geometry (FL22) where a stress sweep from 0 to 560Pa at 25°C and a G' value (storage modulus) for a stress value equal to 1Pa of at least 400 Pa measured by a rheometer with a four blade vane geometry (FL22) where a stress sweep from 0 to 20Pa at a frequency of 1Hz and at 25°C.

8. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners and is thickened by shear so that it has a firmness corresponding to a maximum compression force of at least 20g measured at 25°C by a Texture Analyser equipped with a 5kg load cell and a 20 mm diameter cylinder probe with a penetration into the sample at a constant speed 1mm/s during 10s, and the spread contains lactose crystals visible as distinct and regular crystals of maximum dimension less than 25 microns under optical microscopy in Differential Interference Contrast mode with a magnification factor of 640x.

9. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is substantially free of emulsifiers and thickeners and is thickened by shear so that it has a yield point of at least 90Pa measured by a rheometer with a four blade vane geometry (FL22) using a stress sweep from 0 to 560Pa at 25°C and the spread contains lactose crystals visible as distinct and regular crystals of maximum dimension less than 25 microns under optical microscopy in Differential Interference Contrast mode with a magnification factor of 640x.

10. A shelf stable spread according to any of Claims 1 to 7, wherein the spread contains lactose crystals visible as distinct and regular crystals of maximum dimension less than 25 microns under optical microscopy in Differential Interference Contrast mode with a magnification factor of 640x.

11. A shelf stable spread comprising sweetened condensed milk of fat content 2 to 25 % by weight and water content 15 to 35 % by weight and at least one organoleptic modifying food substance added at a ratio ranging from 2% to 30% by weight and preferably 5% to 15% by weight wherein the spread is thickened by shear, is substantially free of emulsifiers and thickeners and is sufficiently homogeneous that discrete fat globules are substantially not distinctly visible under fluorescence microscopy with a magnification factor of 640x when the product is stained with Nile Red dye.

12. A shelf stable spread according to any of Claims 1 to 7, wherein discrete fat globules are substantially not distinctly visible in the spread under fluorescence microscopy with a magnification factor of 640x when the product is stained with Nile Red dye.

13. A shelf stable spread according to any of Claims 1 to 12, wherein the sweetened condensed milk is fresh milk that has been condensed and sweetened.

14. A shelf stable spread according to any of Claims 1 to 12, wherein the sweetened condensed milk is derived from skimmed milk and milk fat that have been recombined and sweetened.

15. A shelf stable spread according to Claim 14, wherein at least part of the milk fat of the sweetened condensed milk is replaced by vegetable oil.

16. A shelf stable spread according to Claim 14 or claim 15, wherein the sweetened condensed milk contains added maltodextrin or soluble fibers.

17. A shelf stable spread according to any of the preceding claims wherein the at least one organoleptic modifying food substance is selected among the list comprising syrup, fruit, sweet or savory food pastes.

18. A process for the preparation of a shelf stable spread from sweetened condensed milk of fat content 2 to 25 % by weight and water content 15 to 35% by weight and at least one organoleptic modifying food substance added at a ratio ranging from 2% to 30% by weight and preferably 5% to 15% by weight wherein the sweetened condensed milk organoleptic modifying food substance mixture is subjected to high shear, in the absence of added emulsifier or thickener, to thicken the sweetened condensed milk to a spread of firmness corresponding to a maximum compression force of at least 20g measured at 25°C by a Texture Analyser equipped with a 5kg load cell and a 20 mm diameter cylinder probe with a penetration into the sample at a constant speed 1mm/s during 10s.

19. A process for the preparation of a shelf stable spread from sweetened condensed milk of fat content 2 to 25 % by weight and water content 15 to 35% by weight and at least one organoleptic modifying food substance added at a ratio ranging from 2% to 30% by weight and preferably 5% to 15% by weight wherein the sweetened condensed milk is subjected to high shear, in the absence of added emulsifier or thickener, to thicken the sweetened condensed milk to a spread of firmness corresponding to a maximum compression force of at least 20g measured at 25°C by a Texture Analyser equipped with a 5kg load cell and a 20 mm diameter cylinder probe with a penetration into the sample at a constant speed 1mm/s during 10s. and wherein said sheared sweetened condensed milk is mixed with said organoleptic modifying food substance.

20. A process according to Claim 18 or 19, wherein shear is applied by a homogeniser operating at a pressure of at least 100 bar.

21. A process according to Claim 20, wherein shear is applied by a homogeniser operating at a pressure of 150 to 500 bar.

22. A process for the preparation of a shelf stable spread from sweetened condensed milk of fat content 2 to 25 % by weight and water content 15 to 35% by weight and at least one organoleptic modifying food substance added at a ratio ranging from 2% to 30% by weight and preferably 5% to 15% by weight wherein the sweetened condensed milk and organoleptic modifying food substance mixture is subjected to high shear, in the absence of added emulsifier or thickener, to thicken the sweetened condensed milk to a spread having a yield point of at least 90Pa measured by a rheometer with a four blade vane geometry (FL22) using a stress sweep from 0 to 560Pa at 25°C.

23. A process for the preparation of a shelf stable spread from sweetened condensed milk of fat content 2 to 25 % by weight and water content 15 to 35% by weight and at least one organoleptic modifying food substance added at a ratio ranging from 2% to 30% by weight and preferably 5% to 15% by weight wherein the sweetened condensed milk is subjected to high shear, in the absence of added emulsifier or thickener, to thicken the sweetened condensed milk to a spread having a yield point of at least 90Pa measured by a rheometer with a four blade vane geometry (FL22) using a stress sweep from 0 to 560Pa at 25°C and wherein said sheared sweetened condensed milk is mixed with said organoleptic modifying food substance.
